# EUROPÄISCHE PATENTSCHRIFT

(11) **EP 0 630 420 B1**
(45) Veröffentlichungstag und Bekanntmachung des Hinweises auf die Patenterteilung: **14.02.1996**
(21) Anmeldenummer: 93905168.6
(22) Anmeldetag: 04.03.1993
(51) Int. Cl.: C23C 2/36

(54) **VERFAHREN ZUM MEHRLAGIGEN BESCHICHTEN VON STRANGFÖRMIGEM GUT**
PROCESS FOR COATING ELONGATED MATERIALS WITH MULTIPLE LAYERS
PROCEDE POUR REVETIR DE PLUSIEURS COUCHES UN PRODUIT ALLONGE

(30) Priorität: 13.03.1992 DE 4208577
(43) Veröffentlichungstag der Anmeldung: 28.12.1994
(73) Patentinhaber: MANNESMANN Aktiengesellschaft, D-40213 Düsseldorf (DE); I.P. BARDIN CENTRAL RESEARCH, INSTITUTE FOR IRON AND STEEL INDUSTRY, 107005 Moskau (SU); SKB MGD, INSTITUTE OF PHYSICS, Riga (LV)
(72) Erfinder: PARAMONOV, Vladimir A., Moskau, 107005 (RU); TYCHININ, Anatolij I., Moskau, 107005 (RU); MOROZ, Anatolij I., Moskau, 107005 (RU); BIRGER, Boris L., Riga (LV)
(74) Vertreter: Meissner, Peter E., Dipl.-Ing.
(86) Internationale Anmeldenummer: DE9300212
(87) Internationale Veröffentlichungsnummer: WO9318197

(56) Entgegenhaltungen:
- DE-A- 3 124 161
- DE-A- 3 638 249
- GB-A- 1 574 814
- Patent Abstracts of Japan, Vol. 8, No. 7, C-204, abstract of JP-A-58-174565 (KAWATETSU KOUHAN K.K.), 13.10.1983

## Beschreibung

Die Erfindung betrifft ein Verfahren zum mehrlagigen Beschichten von strangförmigem metallischem Gut, vorzugsweise Band oder Draht, durch Aufbringen verschiedener Schichten metallischer Überzugsmaterialien beim kontinuierlichen Durchlauf des zu beschichtenden Gutes durch eine aus mehreren hintereinandergeschalteten Tauchbädern mit schmelzflüssigen Überzugsmaterialien bestehenden Anlage.

Verfahren der eingangs beschriebenen Art sind bekannt (GB 15 74 814) und dienen der Oberflächenverbesserung, insbesondere der Verbesserung der Korrosionsbeständigkeit von Bändern oder Drähten aus Metall. Die in mehreren Schichten aufgetragenen Überzugsmaterialien, beispielsweise erste Schicht Aluminium/5-12 % Silizium und zweite Schicht Aluminium verbessern darüber hinaus die Verformungseigenschaften des Bandes sowie die Haftfestigkeit und die Korrosionsbeständigkeit des Überzugsmaterials. Ein bekanntes Verfahren (DE-A1-31 24 161) sieht vor, ein Stahlband nach dem Vorbereiten seiner Oberfläche nacheinander durch zwei nebeneinander angeordnete Behälter zu leiten, wobei in dem ersten Behälter ein Zinkbad und in dem zweiten ein Legierungsbad enthalten ist und die Badtemperaturen beider Behälter regelbar sind. Die zugehörige Vorrichtung sieht Mittel und Maßnahmen vor, das Band in den Behälter einzuleiten, im Behälter umzuleiten, aus diesem herauszuführen und in gleicher Weise in den nächsten Behälter hinein und aus diesem herauszuleiten. In bekannter Weise werden nach dem Verlassen des zweiten Behälters von dem beschichteten Band mittels Abstreifen überschüssiges Überzugsmaterial entfernt und gleichzeitig oder anschließend wird das Band auf eine Temperatur gebracht, bei der das gesamte Überzugsmaterial erstarrt ist. Auf diese Weise läßt sich eine bessere Oberflächenqualität und Haftfähigkeit der Beschichtung erreichen.

Nachteilig bei dem bekannten Verfahren und der bekannten Vorrichtung ist es, daß eine gezielte Einflußnahme auf den Diffusionsprozeß zwischen dem schmelzflüssigen Überzugsmaterial und dem Stahlband ebensowenig möglich ist, wie eine genaue Abstimmung der optimalen Temperaturverhältnisse beim Aufbringen der ersten und zweiten Beschichtungsschicht. Die Anordnung der nebeneinanderstehenden Behälter mit den notwendigen Umlenkmitteln für das Band legt Grenzen für die minimale Beschichtungszeit fest, weil eine Führung des zu beschichtenden Gutes auf direktem Weg unmöglich ist. Darüber hinaus sind bei der gegebenen Anordnung der Anlage Verschmutzungen der Tauchbäder durch Eisen unvermeidbar, so daß die Qualität des beschichteten Materials leidet.

Aus der DE-A-56 58 249 ist eine Einrichtung zur geradlinigen Führung von Gußstabmaterial durch einen einzelnen vertikal angeordneten Behälter bekannt, bei dem die Tauchbadhöhe einstellbar ist.

Ausgehend von den dargelegten Problemen und Nachteilen des Standes der Technik liegt der vorliegenden Erfindung die Aufgabe zugrunde, das bekannte Beschichtungsverfahren zu verbessern. Durch eine optimierte Regelung der Diffusionsprozesse beim Aufbringen der Beschichtung wird eine bessere Einflußnahme auf die Dicke der Zwischenschicht und deren Haftung sowie die Haftung jeder weiteren Schicht gewährleistet, so daß mit Hilfe verbesserter Vorrichtungen und Anordnungen neue korrosionsfeste Beschichtungen mit besseren Eigenschaften und besseren Oberflächen erzeugt werden können.

Zur Lösung der Aufgabe wird erfindungsgemäß ein Verfahren vorgeschlagen, das dadurch gekennzeichnet ist, daß das strangförmige metallische Gut über die einstellbaren Badtemparaturen und/oder Badhöhen der verschiedenen schmelzflüssigen Überzugsmaterialien temperaturgeregelt und zeitgeregelt geradlinig durch die Anlage geführt wird. Dadurch wird es möglich, eine verbesserte und geregelte Temperaturführung des strangförmigen Gutes und dessen Beschichtung einzustellen, so daß die jeweils für die Beschichtung oder Bildung von intermetallischen Zwischenschichten notwendige Behandlungstemperatur und -zeit einstellbar wird.

In einer besonders günstigen Ausgestaltung der Erfindung wird vorgeschlagen, daß jede auf das strangförmige metallische Gut aufgebrachte Schicht des Überzugsmaterials in dem in Durchlaufrichtung folgenden Tauchbad bei einer Temperatur gleich oder unter der Erstarrungstemperatur des am niedrigsten schmelzenden Elementes der zuvor aufgebrachten Schicht abgekühlt wird. Auf diese Weise lassen sich die Tauchbäder selbst zur Temperaturführung nutzen, indem die Badtemperaturen und/oder die Badhöhe bzw. die Behandlungszeit entsprechend aufeinander abgestimmt werden.

Selbstverständlich ist es nach einem anderen Merkmal der Erfindung auch möglich, daß eine oder mehrere auf das strangförmige metallische Gut aufgebrachte Schichten in dem in Durchlaufrichtung folgenden Tauchbad einer Temperatur ausgesetzt wird bzw. werden, die höher als die Erstarrungstemperatur der in einem der vorherigen Tauchbäder aufgebrachten Schicht oder Schichten ist. Das ist dann sinnvoll, wenn die erste aufgebrachte Schicht als Sperrschicht vor weiteren Beschichtungen dient und zusammen mit der weiteren aufgebrachten Beschichtung wie ein Fluß-Mittel vermischt wird.

In einer Ausgestaltung der Erfindung ist vorgesehen, daß die letzte, auf das strangförmige metallische Gut aufgebrachte Schicht nach Verlassen des Tauchbades schnell auf eine Temperatur gleich oder unterhalb der Erstarrungstemperatur dieser Schicht abgekühlt und im Anschluß daran um 0,3 bis 3 % dickenreduziert wird. Durch diesen Verformungsschritt werden Oberfläche und Gefüge der Beschichtung abschließend verbessert.

Eine erfindungsgemäße Vorrichtung zur Durchführung des Verfahrens ist gekennzeichnet durch mehrere in einer Reihe angeordnete Behandlungsbehälter mit Durchlaßkanälen für das strangförmige metallische Gut unterhalb des Tauchbadspiegels, wobei die Durchlaßkanäle durch magnethydrodynamische Dichtungen verschlossen sind und daß die Temperatur und/oder Tauchbadhöhe des Überzugsmaterials in jedem Beschichtungsbehälter einstellbar sind.

Mit derartigen und derart angeordneten Behältern läßt sich das geradlinige Führen des strangförmigen metallischen Gutes ermöglichen, was für die Durchführung des erfindungsgemäßen Verfahrens wichtig ist, weil auf nachteilige Umlenk- und Führungsrollen zum Leiten des Gutes in die Tauchbäder und aus diesen heraus verzichtet werden kann. Dadurch lassen sich die Zeiten zwischen den einzelnen Beschichtungsschritten kurz genug halten, um eine geregelte Temperaturführung des strangförmigen Gutes und dessen Beschichtung zu ermöglichen.

In einer bevorzugten Ausgestaltung der Erfindung ist vorgesehen, daß die Beschichtungsbehälter vertikal übereinander angeordet sind. In diesem Fall sind die magnethydrodynamischen Dichtungen jeweils um den durch den Boden geführten Durchlaßkanal der einzelnen Beschichtungsbehälter angebracht, die das strangförmige Gut von oben nach unten oder unten nach oben durchläuft. Wie bei allen anderen Vorschlägen der Erfindung ist die gesamte Anlage vom Luftsauerstoff abgeschlossen und unter Schutzgas betrieben.

Eine besonders günstige Lösung zur Durchführung des Verfahrens ist gegeben, wenn jedem Beschichtungsbehälter mindestens ein Vorschmelzbehälter zugeordnet ist, zwischen dem und dem Beschichtungsbehälter die Schmetze unter Luftabschluß umwälzbar ist. Vorzugsweise sind die Beschichtungsbehälter volumenmäßig um ein Vielfaches kleiner als der bzw. die ihm zugeordneten Vorschmelzbehälter ausgebildet.

Die Verwendung derartiger Vorschmelzbehälter mit größerem Volumen ermöglicht es, die eigentlichen Beschichtungsbehälter so klein auszubilden, daß deren Volumen an Überzugsmaterial gering ist. Das ermöglicht es, sehr schnell den Badspiegel des Überzugsmateriales abzusenken oder anzuheben und damit die Behandlungszeit des durchlaufenden strangförmigen Gutes zu variieren. Auch läßt sich die zugeführte Schmelze aus Überzugsmaterial temperaturmäßig sehr viel schneller regeln, als wenn ein großes Volumen an Überzugsmaterial gekühlt oder erhitzt werden müßte. Das Einschmelzen des Überzugsmaterials kann dann in dem neben bzw. seitlich unterhalb des Beschichtungsbehälters angeordneten Vorschmelzbehälters erfolgen, zwischen dem und dem Beschichtungsbehälter das Umwälzen des Überzugsmaterials, beispielsweise mit Hilfe von Magnetpumpen erfolgt.

Zur Ausgestaltung der erfindungsgemäßen Anlage ist nach einem weiteren Merkmal der Erfindung vorgesehen, daß das strangförmige metallische Gut - in Durchlaufrichtung gesehen - hinter dem letzten oder in einem zusätzlichen Beschichtungsbehälter um eine Umlenkrolle geführt ist, der ein Nachwalzgerüst für das beschichtete Gut nachgeordnet ist. Mit Hilfe der Umlenkrolle wird das beschichtete strangförmige Gut in die Ebene umgelenkt, in der die Nachwalzung des beschichteten Gutes möglich wird. Außerdem kann zwischen Umlenkrolle und Nachwalzgerüst eine zusätzliche Kühleinrichtung geschaltet sein, mit der eine Temperaturbeeinflussung des beschichteten Bandes vor dem Umformprozeß möglich wird.

In einer weiteren Ausgestaltung der Erfindung wird vorgeschlagen, daß bei Anordnung der Umlenkrolle im zusätzlichen Beschichtungsbehälter das strangförmige Gut durch den Tauchbadspiegel ein- und herausgeleitet ist und die Umlenkrolle innerhalb des Tauchbades heb- und senkbar ist. Bei diesem Vorschlag ist unterhalb des letzten erfindungsgemäßen Beschichtungsbehälters ein weiterer Behälter mit schmelzflüssigem Überzugsmaterial vorgesehen, dessen Temperatur regelbar ist. Auf diese Weise kann das beschichtete strangförmige Gut innerhalb dieses Behälters auf gewünschte Temperaturen abgekühlt werden, wobei die Behandlungszeit in dem Behälter durch Verstellen der Umlenkrolle in vertikaler Richtung beeinflußbar ist. Dem zusätzlichen Behälter kann in bekannter Weise ein Düsenmesser zum Abstreifen von überschüssigem Beschichtungsmaterial von der Oberfläche des zu beschichtenden Gutes nachgeschaltet sein.

Ein Ausführungsbeispiel der Erfindung ist in der Zeichnung dargestellt, anhand derer die Erfindung näher erläutert wird. Es zeigen:
- Fig. 1: zeigt eine erfindungsgemäße Vorrichtung zum mehrlagigen Beschichten eines Bandes in schematischer Darstellung,
- Fig. 2: ist eine Ausführungsvariante der erfindungsgemäßen Anlage mit Umlenkrolle im Tauchbad,
- Fig. 3 und 4: dienen der Beschreibung der Temperaturführung eines Ausführungsbeispiels.

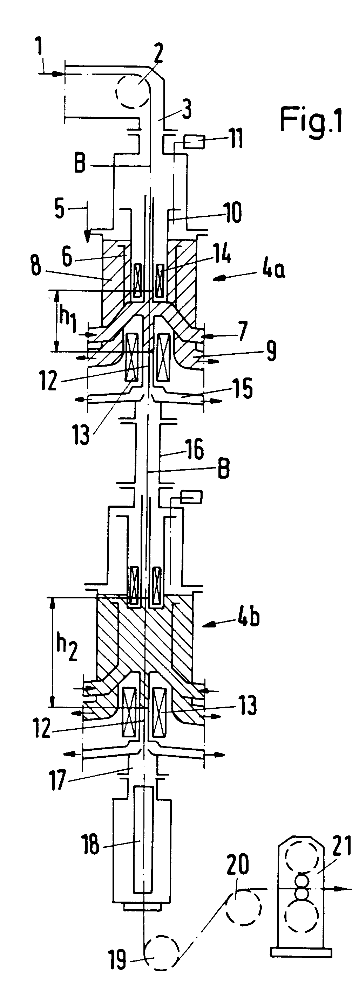

In Figur 1 ist die erfindungsgemäße Anlage teilweise geschnitten und grob schematisch dargestellt. Mit B ist ein einlaufendes Stahlband bezeichnet, das in Pfeilrichtung 1 von einer Bandvorbereitung (Glühofen) kommend um eine Umlenkrolle 2 aus der Horizontalen in die Vertikale geführt wird. Das Band B ist in einem bei 3 angedeuteten Kanal von der Umgebungsluft abgeschlossen geführt, innerhalb des Kanales 3 verhindert Schutzgas die Oxidation der Bandoberfläche. Mit 4a und 4b sind zwei Beschichtungsbehälter bezeichnet, die in Bandlaufrichtung 5 hintereinander, d. h. vertikal übereinander angeordnet sind. Jeder Beschichtungsbehälter 4a, 4b besteht aus einem Innenbehälter 6, dem das schmelzflüssige Überzugsmaterial bei 7 von einem (nicht dargestellten) Vorschmelzbehälter kommend beispielsweise durch Magnetpumpen zugeführt wird und einem Außenbehälter 8, über den das Überzugsmaterial durch Ablaufkanäle 9 zum Vorschmelzbehälter zurückgeführt werden kann. In den Innenbehältern 6 ist, wie bei 10 dargestellt, ein Tauchkörper, bei 11 heb- und senkbar eingesetzt, mit dem die wirksame Behandlungsbadhöhe h des Überzugsmaterials veränderbar ist. Der bodenseitige Durchlaßkanal 12 des Innenbehälters 6 für das Band B ist durch eine bekannte magnethydrodynamische Dichtung verschlossen, wie mit der Spule 13 angedeutet ist. Diese magnethydrodynamische Dichtung verhindert auf elektromagnetischem Weg ein Ausfließen des schmelzflüssigen metallischen Überzugsmaterials aus dem Durchlaßkanal.

Eine ähnliche Dichtung ist, bei 14 dargestellt, innerhalb des Tauchkörpers 10 vorgesehen, um zu verhindern, daß flüssiges Überzugsmaterial im Tauchkörper 10 hoch steigt und somit ein definiertes Einstellen der Behandlungsbadhöhe h verhindert.

Mögliche Leckagen oder im Störfall fangen zusätzliche Kanäle 15 unterhalb der Durchtrittsöffnung für das Band das schmelzflüssige Überzugsmaterial auf und leiten dieses gleichfalls zurück in den Vorschmelzbehälter des jeweiligen Beschichtungsbehälters.

Der Beschichtungsbehälter 4b ist gleich aufgebaut, so daß auf die Beschreibung des Behälters 4a Bezug genommen werden kann. Dem Beschichtungsbehälter 4b ist ein anderer oder sind mehrere andere Vorschmelzbehälter zugeordnet. Damit wird es möglich, unterschiedliche Überzugsmaterialien zuzuführen. Zwischen den Beschichtungsbehältern 4a und 4b ist ein geschlossener unter Schutzgas stehender Kanal 16 vorgesehen, der die Einstellung einer bestimmten Temperatur zwischen den Beschichtungsbehältern 4a und 4b ermöglicht. Unterhalb des Beschichtungsbehälters 4b bzw. auslaufseitig desselben ist zunächst ein weiterer, das System abschließender Kanal 17 vorgesehen, durch den das Band in die Kühlstrecke 18 gelangt. Zum Umlenken des Bandes dienen die Umlenkrollen 19 und 20 vor einem Walzgerüst 21, in dem das beschichtete Band nachgewalzt wird.

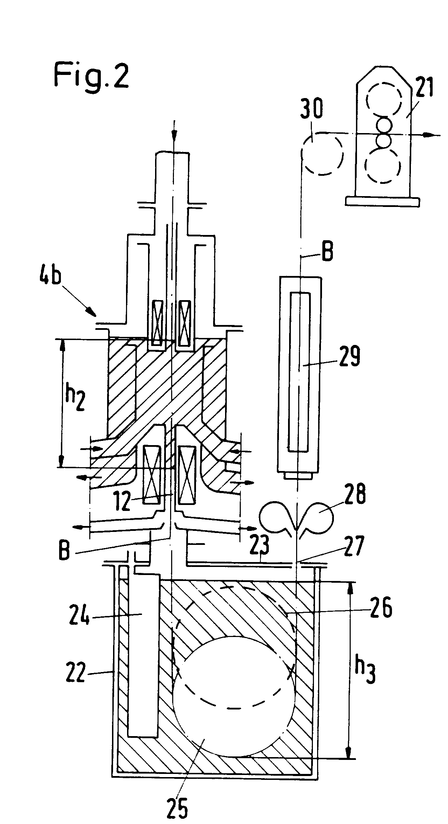

In Figur 2 ist eine alternative Ausbildung des Auslaufbereiches der Behandlungsstrecke dargestellt. Im Anschluß an den Beschichtungsbehälter 4b, dessen konstruktive Ausbildung zur Figur 1 bereits beschrieben wurde, gelangt das Band B in einen zusätzlichen Beschichtungsbehälter 22, der bei 23 mit einem Deckel verschlossen ist. Der Behandlungsbehälter 22 enthält gleichfalls eine Schmelze aus Überzugsmaterial, deren Temperatur der Erstarrungstemperatur der letzten Beschichtung entspricht oder darunter liegt. Ein Aufheizen der Schmelze auf ungewünschte Temperaturen wird durch den Kühler 24 verhindert, über den die Temperatur der Schmelze einstellbar ist. Die Behandlungszeit, d. h. die Durchlaufzeit des Bandes läßt sich dadurch variieren, daß die Umlenkrolle 25 in der Schmelze höhenverstellbar ist, wie an der strichpunktierten Linie 26 erkennbar ist. Das bei 27 den zusätzlichen Beschichtungsbehälter 22 verlassende Band B wird zunächst durch ein bekanntes Düsenmesser 26 geführt, mit welchem überschüssiges Überzugsmaterial entfernt wird, durchläuft dann eine Kühlstrecke 29, um nach Umlenken über eine Umlenkrolle 30 ebenfalls einem Walzgerüst 21 zugeleitet zu werden. Die erfindungsgemäße Einrichtung und das Verfahren ermöglichen auf diese Weise die Beschichtung des durchlaufenden Bandes bei vertikalem Bandverlauf nacheinander in verschiedenen Tauchbädern, wobei in der Regel im nachfolgenden Tauchbad jeweils die erste Beschichtung gehärtet und gleichzeitig eine weitere Schicht aufgetragen wird. Die letzte Schicht wird bis zu ihrer Erstarrung gekühlt und anschließend verformt.

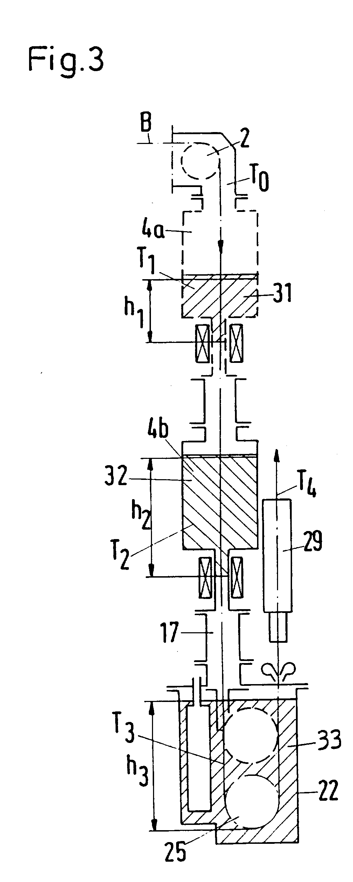

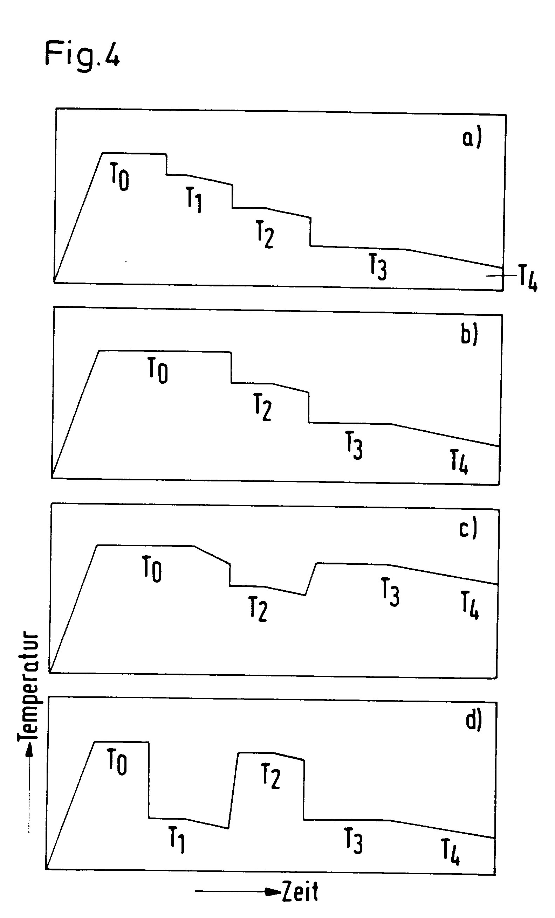

Anhand von Figur 3 und Figur 4 werden Ausführungsbeispiele des erfindungsgemäßen Verfahrens dargestellt. Das kaltgewalzte Stahlband B wird nach dem Glühen und Vorbehandeln durch die Umlenkrolle 2 in vertikaler Richtung umgelenkt und in den ersten Beschichtungsbehälter 4a eingeleitet. Das schmelzflüssige Überzugsmaterial, hier mit 31 bezeichnet, ist mit einer Badhöhe h1 im Beschichtungsbehälter 4a eingestellt und hat die Temperatur T₁. Mit T₀ ist die Temperatur angedeutet, auf die das Band B erwärmt und gehalten ist, wenn es die erfindungsgemäße Anlage erreicht.

Das im Beschichtungsbehälter 4a im Überzugsmaterial 31 beschichtete Band wird mit der entsprechenden Temperatur in den Behandlungsbehälter 4b geführt, wo es in das schmelzflüssige Überzugsmaterial 32 eintaucht. Der Badspiegel des Überzugsmaterials 32 ist mit h2 bezeichnet und bedeutet, weil höher, eine längere Behandlungszeit, als im Beschichtungsbehälter 4a. Die Temperatur im Beschichtungsbehälter 4b ist auf T₂ eingestellt.

Das den Beschichtungsbehälter 4b verlassende Band gelangt durch den Kanal 17 in den zusätzlichen Behälter 22, in dem das schmelzflüssige Überzugsmaterial 33 mit der Temperatur T₃ eingestellt ist. In dem Behälter 22 wird die letzte Beschichtung aufgebracht, wonach ein Abschrecken in der Kühlstrecke 29 auf die Temperatur T₄ erfolgt.

In Figur 4 ist beispielhaft der Temperaturverlauf von vier verschieden gefahrenen Anlagen aufgezeigt.

Im Bild a wird eine dreilagige Beschichtung durchgeführt, wobei das Stahlband mit der Einlauftemperatur T₀ durch aufeinanderfolgende Schmelzbäder mit den Temperaturen T₁>T₂>T₃ geführt wird und danach auf die Temperatur T₄ abgekühlt wird.

Bild b zeigt eine zweilagige Beschichtung, wobei das Stahlband durch aufeinanderfolgende Tauchbäder mit den Temperaturen T₂>T₃ geführt wird.

Im Bild C wird ebenfalls eine zweilagige Beschichtung durchgeführt, wobei im Gegensatz zum Bild b das Stahlband durch aufeinanderfolgende Tauchbäder mit den Temperaturen T₂ < T₃ geführt wird.

Schließlich ist in Bild d eine dreilagige Beschichtung vorgesehen, wobei das Stahlband durch aufeinanderfolgende Tauchbäder mit den Temperaturen T₁>T₂<T₃ geführt wird.

Natürlich sind auch andere Variationen denkbar und möglich. Durch das beschriebene Verfahren und die verwendete Vorrichtung ist es möglich, ein besonders genau steuerbares Beschichtungsverfahren durchzuführen, bei dem die Diffusionsprozesse beim Beschichten des Stahlbandes genauestens eingestellt werden können. Jede der aufgebrachten Schichten haften ausgezeichnet. Es ist möglich, durch Kombination mehrerer Beschichtungstauchbäder neue korrosionsbeständige Schichten zu erhalten.

## Patentansprüche

1. verfahren zum mehrlagigen Beschichten von strangförmigem metallischen Gut, vorzuzgsweise Band oder Draht durch Aufbringen verschiedener Schichten metallischer Überzugsmaterialien beim kontinuierlichen Durchlauf des zu beschichtenden Gutes durch eine aus mehreren hintereinandergeschalteten Tauchbädern mit schmelzflüssigen Überzugsmaterialien bestehende Anlage,
dadurch gekennzeichnet, daß das strangförmige metallische Gut über die einstellbaren Badtemperaturen und/oder Badhöhen der verschiedenen schmelzflüssigen Überzugsmaterialien temperaturgeregelt und zeitgeregelt geradlinig durch die Anlage geführt wird.

2. Verfahren nach Anspruch 1,
dadurch gekennzeichnet,
daß jede auf das strangförmige metallische Gut aufgebrachte Schicht des Überzugsmaterials im in Durchlaufrichtung folgenden Tauchbad bei einer Temperatur gleich oder unter der Erstarrungstemperatur des am niedrigsten schmelzenden Elements der zuvor aufgebrachten Schicht abgekühlt wird.

3. Verfahren nach Anspruch 1,
dadurch gekennzeichnet,
daß eine oder mehrere auf das strangförmige metallische Gut aufgebrachte Schichten in dem in Durchlaufrichtung folgenden Tauchbad einer Temperatur ausgesetzt wird bzw. werden, die höher als die Erstarrungstemperatur der in einem der vorherigen Tauchbäder aufgebrachten Schicht oder Schichten ist.

4. Verfahren nach Anspruch 1 bis 3,
dadurch gekennzeichnet,
daß die letzte auf das strangförmige metallische Gut aufgebrachte Schicht nach Verlassen des Tauchbades schnell auf eine Temperatur gleich oder unterhalb der Erstarrungstemperatur dieser Schicht abgekühlt und im Anschluß daran um 0,3 bis 3 % nachgewalzt wird.

5. Vorrichtung zum Durchführen des Verfahrens nach Anspruch 1 bis 4,
gekennzeichet durch
mehrere in einer Reihe angeordnete Beschichtungsbehälter (4a, 4b) mit Durchlaßkanälen (12) für das strangförmige metallische Gut (B) unterhalb der Tauchbadspiegel (h), wobei die Durchlaßkanäle (12) durch magnethydrodynamische Dichtungen (13) verschlossen sind und daß die Temperatur (T) und/oder die Tauchbadhöhe (h) des Überzugsmaterials (31, 32, 33) in jedem Beschichtungsbehälter (4a, 4b) einstellbar sind.

6. Vorrichtung nach Anspruch 5,
dadurch gekennzeichnet,
daß die Beschichtungsbehälter (4a, 4b) vertikal übereinander angeordet sind.

7. Vorrichtung nach Anspruch 5 und 6,
dadurch gekennzeichnet,
daß jedem Beschichtungsbehälter (4a, 4b) mindestens ein Vorschmelzbehälter zugeordnet ist, zwischen dem und dem Beschichtungsbehälter (4a bzw. 4b) das schmelzflüssige Überzugsmateril (31, 32, 33) unter Luftabschluß umwälzbar ist.

8. Vorrichtung nach Anspruch 7,
dadurch gekennzeichnet,
daß die Beschichtungsbehälter (4a, 4b) volumenmäßig um ein Vielfaches kleiner als der bzw. die ihm zugeordneten Vorschmelzbehälter ausgebildet sind.

9. Vorrichtung nach Anspruch 4 bis 8,
dadurch gekennzeichnet,
daß das strangförmige metallische Gut (B) - in Durchlaufrichtung gesehen - hinter dem letzten (4b) oder einem zusätzlichen Beschichtungsbehälter (22) um eine Umlenkrolle (25) geführt ist, der ein Nachwalzgerüst (21) für das beschichtete Gut (B) nachgeordnet ist.

10. Vorrichtung nach Anspruch 9,
dadurch gekennzeichnet,
daß bei Anordnung der Umlenkrolle (25) im zusätzlichen Beschichtungsbehälter (22) das strangförmige Gut (B) durch den Tauchbadspiegel ein- und herausgeleitet ist und die Umlenkrolle (25) innerhalb des Tauchbades heb- und senkbar (26) ist.

## Claims

1. Process for multi-layered coating of strand-shaped metal material, preferably tape or wire, through application of different layers of metallic coating materials, with continuous passage of material to be coated through a device comprising several immersion-baths, arranged one behind another, with molten coating materials,
characterized in that
strand-shaped, metal material is directed, in a straight line, through equipment concerned, with temperature and time being regulated by means of bath temperatures and/or bath levels of different molten coating materials.

2. Process in accordance with claim 1, characterized in that
each layer of coating material applied onto strand-shaped metal material is cooled, in a following bath in a direction of passage, at a temperature equal to or below a hardening temperature of a lowest melting element of a previously applied layer.

3. Process in accordance with claim 1,
characterized in that
one or more layers applied onto strand-shaped metal material is or are exposed to a temperature in a following immersion bath, in a direction of passage, which is higher than a hardening temperature of a layer or layers applied in one of preceding immersion baths.

4. Process in accordance with claims 1 to 3,
characterized in that
a last layer applied onto strand-shaped material, after leaving an immersion bath, is quickly cooled to a temperature at or below a hardening temperature of this layer and is then planished off by 0.3 to 3%.

5. Equipment for carrying out a process in accordance with claims 1 to 4,
characterized by
several coating vessels (4a, 4b), arranged in a row, with through-channels (12) for strand-shaped material (B) below an immersion bath surface-level (h), where through-channels (12) are closed by magneto-hydrodynamic seals (13) and a temperature (T) and/or a surface-level (h) of a cooling material (31, 32, 33) can be adjusted in each coating vessel (4a, 4b).

6. Equipment in accordance with claim 5,
characterized in that
coating vessels (4a, 4b) are disposed vertically one above another.

7. Equipment in accordance with claim 5 or 6,
characterized in that
each coating vessel (4a, 4b) has at least one initial-melting vessel associated with it, between which and a coating vessel (4a, 4b) molten coating material (31, 32, 33) can be turned, with exclusion of air.

8. Equipment in accordance with claim 7,
characterized in that
a coating vessel (4a, 4b) is developed several times smaller in volume than (an) initial melting vessel(s) associated with it.

9. Equipment in accordance with claims 4 to 8,
characterized in that
strand-shaped, metal material (B) - as seen in a direction of passage - is directed around a guide roller (25), coming after a finishing frame (21) for a coated material (B), after a last (4b) or an additional coating vessel (22).

10. Equipment in accordance with claim 9,
characterized in that,
with arrangement of a guide roller (25) in an additional coating vessel (22), strand-shaped material (B) is directed into an out of a surface of an immersion bath and a said guide roller (25) can be raised and lowered inside an immersion bath concerned.

## Revendications

1. Procédé pour revêtir de plusieurs couches un produit métallique allongé, de préférence un ruban ou un fil de fer, par le dépôt de différentes couches de matériaux de revêtement métalliques, par le passage continu du produit à recouvrir à travers une installation constituée de plusieurs bains de plongée agencés les uns derrière les autres et comportant des matériaux de revêtement fondus,
caractérisé en ce que le produit métallique allongé est guidé de façon rectiligne à travers l'installation, en étant réglé en température et en temps par l'intermédiaire des températures de bain et/ou des hauteurs de bain réglables des différents matériaux de revêtement fondus.

2. Procédé selon la revendication 1,
caractérisé en ce que chaque couche du matériau de revêtement déposé sur le produit métallique allongé est refroidie dans le bain de plongée suivant dans le sens de passage, à une température égale ou inférieure à la température de solidification de l'élément fondant le plus bas de la couche déposée précédemment.

3. Procédé selon la revendication 1,
caractérisé en ce qu'une ou plusieurs couches déposées sur le produit métallique allongé sont soumises, dans le bain de plongée suivant dans le sens de passage, à une température qui est supérieure à la température de solidification de la couche ou des couches déposées dans l'un des bains de plongée précédents.

4. Procédé selon l'une des revendications 1 à 3,
caractérisé en ce que la dernière couche déposée sur le produit métallique allongé est rapidement refroidie, après avoir quitté le bain de plongée, à une température égale ou inférieure à la température de solidification de cette couche et est ensuite laminée de 0,3 à 3%.

5. Dispositif pour la mise en oeuvre du procédé selon l'une des revendications 1 à 4,
caractérisé par plusieurs récipients de recouvrement (4a, 4b) agencés dans une rangée et comportant des canaux de passage (12) pour le produit métallique allongé (B) au-dessous du niveau (h) du bain de plongée, les canaux de passage (12) étant fermés par des joints hydromagnétiques (13), et en ce que la température (T) et/ou la hauteur (h) du bain de plongée du matériau de revêtement (31, 32, 33) peut être réglée dans chaque récipient de recouvrement (4a, 4b).

6. Dispositif selon la revendication 5,
caractérisé en ce que les récipients de recouvrement (4a, 4b) sont agencés verticalement les uns au-dessus des autres.

7. Dispositif selon l'une des revendications 5 ou 6,
caractérisé en ce qu'à chaque récipient de recouvrement (4a, 4b) est associé au moins un récipient de préfusion, le matériau de revêtement fondu (31, 32, 33) pouvant être laminé avec exclusion d'air entre le récipient de préfusion et le récipient de recouvrement (4a ou 4b).

8. Dispositif selon la revendication 7,
caractérisé en ce que les récipients de recouvrement (4a, 4b) sont beaucoup plus petits en volume que le ou les récipients de préfusion associés.

9. Dispositif selon l'une des revendications 4 à 8,
caractérisé en ce que le produit métallique allongé (B) est guidé --vu dans le sens de passage-- derrière le dernier récipient de recouvrement (4b) ou un récipient de recouvrement supplémentaire (22), autour d'un galet de renvoi (25), en aval duquel est agencée une cage d'écrouissage (21) pour le produit recouvert (B).

10. Dispositif selon la revendication 9,
caractérisé en ce que, par l'agencement du galet de renvoi (25) dans le récipient de recouvrement supplémentaire (22), le produit allongé (B) est entré et sorti à travers le niveau du bain de plongée et le galet de renvoi (25) peut être levé et abaissé (26) à l'intérieur du bain de plongée.
